**Europäisches Patentamt**

(19) **European Patent Office**

**Office européen des brevets**

(11) Veröffentlichungsnummer: **0 082 520**

**B1**

(12) **EUROPÄISCHE PATENTSCHRIFT**

(45) Veröffentlichungstag der Patentschrift:
08.04.87

(21) Anmeldenummer: 82111825.4

(22) Anmeldetag: 20.12.82

(51) Int. Cl.⁴: **B 01 D 29/08,** B 01 D 29/38,
B 01 D 23/10, B 01 D 23/24

(54) Vorrichtung zum Abscheiden von Suspensa aus einem unter Druck stehenden Fluid.

(30) Priorität: 23.12.81 DE 3151189

(43) Veröffentlichungstag der Anmeldung:
29.06.83 Patentblatt 83/26

(45) Bekanntmachung des Hinweises auf die Patenterteilung:
08.04.87 Patentblatt 87/15

(84) Benannte Vertragsstaaten:
AT BE CH DE FR GB IT LI LU NL SE

(56) Entgegenhaltungen:
EP-A-0 001 183
DE-A-2 733 025
DE-A-2 900 517
DE-C-38 010
FR-A-1 547 029
GB-A-868 139
US-A-2 022 524
US-A-2 079 365
US-A-3 278 031
US-A-3 547 270
US-A-4 246 119

(73) Patentinhaber: COJAFEX B.V., Glashaven 10c, NL-3011 XH Rotterdam (NL)

(72) Erfinder: Hofstede, Johannes Marinus, Saffier 5, Berkel en Rodenrijs (NL)

(74) Vertreter: **Dr. Elisabeth Jung Dr. Jürgen Schirdewahn Dipl.- Ing. Claus Gernhardt, P.O. Box 40 14 68 Clemensstrasse 30, D-8000 München 40 (DE)**

LIBER, STOCKHOLM 1987

## Beschreibung

Die Erfindung bezieht sich auf eine Vorrichtung zum Abscheiden von Suspensa aus einem unter Druck stehenden Fluid gemäß dem Oberbegriff von Anspruch 1 (vgl. DE-OS 21 36 877).

Suspensa sind Schwebstoffe typischerweise in einem Größenbereich zwischen einem tausendstel Millimeter und einigen Millimetern. Sie treten in Konzentrationen von wenigen Milligramm pro Liter bis zu einigen Gramm pro Liter auf.

Es ist bekannt, derartige Suspensa in einem als Filtermedium dienenden Granulatbett abzuscheiden. Als besonders billige und zugleich hinreichend wirksame Granulatmaterialien haben sich gerundeter oder kantiger Sand, z.B. Quarzsand, sowie Anthrazit bewährt. Diese Granulate sind relativ hart und - im Gegensatz zu manchen Ionenaustauscherharzen - unquellbar. Die Erfindung zieht auch andere unquellbare Granulate in Betracht, wie beispielsweise Silikatkügelchen, Hohlkügelchen aus Aluminiumoxid sowie andere künstlich hergestellte Granulate vergleichbarer Art einschließlich solchen aus Kunststoff oder Kunstharzen, welche eine geringere Härte haben, aber unter den Filtrationsbedingungen nicht wesentlich quellen. Bevorzugt sind dabei auch solche Granulate, die sich während des Filtrationsbetriebes im wesentlichen inert verhalten. Es können dabei Granulate dieser Art in verschiedener Körnung, aber auch Mischungen von Granulaten verschiedener Art auftreten.

Granulatbetten dieser Art haben den Vorteil, daß man mit sehr einfachen Mitteln durch entsprechend kleine Körnung eine nahezu beliebig geringe Porengröße erreichen kann, um in diesen Poren im wesentlichen - wenn man etwa von Oberflächeneffekten und anderen Effekten sekundärer Art absieht- eine mechanische Abscheidung vorzunehmen. Es ist dabei bekannt (DE-AS 11 25 889), geschichtete Granulatbetten zu verwenden, bei denen die Körnung des Granulats in Richtung der Strömung des zu filtrierenden Fluids abnehmen soll. In manchen Fällen verwendet man aber auch homogen gemischte Granulate verschiedener Körnung.

Granulatbetten dieser Art benötigen nicht, wie etwa Betten aus Ionenaustauscherharzen, eine Regenerierung. Sie müssen jedoch durch einen Rückspülstrom von Ablagerungen freigespült werden.

Bei konventionellen derartigen Vorrichtungen wird das Granulatbett normalerweise so lange in einer Richtung mit dem zu filtrierenden Fluid durchströmt, bis infolge Abscheidung einer zunehmenden Suspensa-Menge der Strömungswiderstand eine kritische Grenze erreicht. Dann wird das Granulatbett im Gegenstrom mittels eines Spülfluids abgereinigt, welches die abgeschiedenen Schwebstoffe in einen eigenen Auslaß abführt.

Am gebräuchlichsten sind derartige Granulatbetten, bei denen man vor Betriebsaufnahme Granulate unterschiedlicher Körnung so schichtet, daß von oben nach unten die Feinheit der Körnung zunimmt. Derartige Granulatbetten werden dann mit dem zu filtrierenden Fluid von oben nach unten beschickt, bis ein gegenläufiger Rückspülstrom erforderlich wird. Dieser Rückspülstrom fluidisiert jedoch das Granulatbett und bewirkt dabei eine Umschichtung der Körnung, so daß nach einiger Zeit entgegen der gewünschten Porenverteilung die Granulate feiner Körnung oben und die Granulate grober Körnung unten gelegen sind. Man hat schon versucht (US-A-4 246 119), diesem Inversionseffekt durch Anwendung von Granulaten unterschiedlichen spezifischen Gewichtes entgegenzuwirken, ohne jedoch überzeugende Erfolge bei der Vermeidung von Umschichtungen zu erzielen. Außerdem sind nach ihrem spezifischen Gewicht ausgesuchte Granulate nicht immer für die erwünschte Filterwirkung optimal.

Bei Granulatbetten für die Filtration eines flüssigen Fluids wird häufig dem Spülfluid noch feinverteilte Luft zugesetzt, um das Granulatbett in den fluidisierten Zustand eines Wirbelbettes zu bringen und so abgeschiedene Suspensa noch besser freimachen zu können. In jedem Falle besteht dabei die Gefahr, daß das Spülfluid Granulat feiner Körnung in den Auslaß des Spülfluids mitführt.

Um dem entgegenzuwirken, hat man bereits in Betracht gezogen, das Granulatbett dadurch zusammenzuhalten, daß über ihm eine Auffangeinrichtung für feinkörniges Granulat, z.B. ein Sieb, angeordnet wird (DE-PS 832 596, Z. 21 bis 34 zum dortigen Stand der Technik sowie dortigen Anspruch 1).

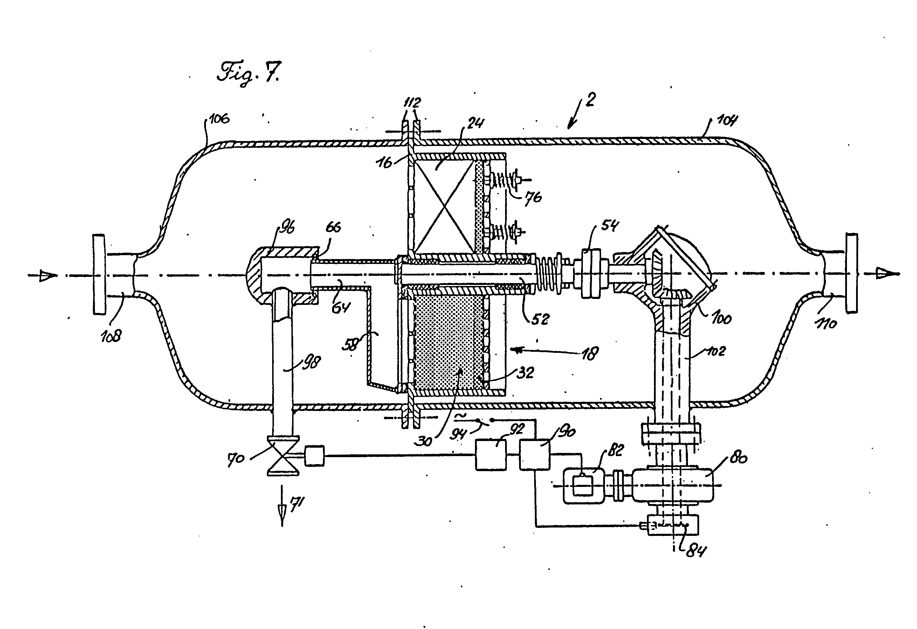

Alternativ hat man auch schon in Betracht gezogen, ein Granulatbett von unten nach oben von dem zu filtrierenden Fluid durchströmen zu lassen. Hierbei kommt es jedoch zu noch größeren Nachteilen. So kann bereits das Filtrat feinkörniges Granulat vom Granulatbett entfernen, wenn man nicht wiederum eine Auffangvorrichtung, wie ein Sieb, über dem Granulatbett anordnet. Ferner kann es zu Verklumpungen von abgeschiedenen Schwebstoffen mit feinkörnigem Granulat kommen; derartige Verklumpungen sind nur schwierig aus dem Granulatbett herauszuspülen. Es ist ferner praktisch nicht möglich, das Granulatbett im Gegenstrom, also im Strom von oben nach unten, zu fluidisieren. Man hat deshalb bei Leitung eines Fluidstroms von unten nach oben durch ein Granulatbett auch den Spülstrom von unten nach oben durch das Granulatbett geleitet, was jedoch Schwierigkeiten der Abreinigung ergibt (Monografie: Waste Water Engineering, Metcalf Eddy, Inc., 2nd edition 1979, McGraw-Hill Company, New York, S. 229-231, insbes. S. 230, Fig. 6-30, insbes. Teilabb. 3b).

Bei vertikal durchströmten konventionellen Granulatbetten hat man bisher sehr hohe Schichtstärken für erforderlich gehalten, sei es um Entmischungsvorgänge wenigstens über eine längere Betriebszeit teilweise zu kompensieren, sei es um nur relativ selten zum Reinigen rückspülen zu müssen. Trotzdem hat man noch etwa alle Tage oder in Abständen weniger Tage die Filtration unterbrechen müssen um rückzuspülen, da tatsächlich die eigentlich wirksame Abscheideschicht nur einen Bruchteil der Gesamtstärke eines solchen vertikal durchströmten Granulatbetts ausmacht und diese Abscheideschicht, in der sich bei Inversion feinkörniges Granulat anlagert, relativ bald verstopft.

Man hat auch schon ein Granulatbett im Zwischenraum zwischen zwei konzentrischen vertikalen Zylindern angeordnet und eine zu filtrierende Flüssigkeit radial und damit horizontal durch dieses zylinderschalenförmige Granulatbett von außen nach innen geführt (HU-PS 172 006). Dabei kann es jedoch durch Absacken gröberkörnigen Granulats nach unten und Aufschwimmen feinerkörnigen Granulats nach oben zu einer Entmischung im Granulatbett schon während des Filtrierbetriebes kommen. Auch ist nicht sichergestellt, daß nicht bei sich setzendem Granulatbett Kurzschlußbrücken der Strömung im oberen Bereich der zylinderschalenförmigen Granulatschicht auftreten.

Bei der bekannten Vorrichtung mit den Merkmalen des Oberbegriffs von Anspruch 1 (DE-OS 21 36 887), die insbesondere für die Filtration von Wasser, z.B. Abwasser, bestimmt wird und bei der mehrere vertikal gestellte Granulatbetten ebenfalls horizontal durchströmt werden, wird besonders feines Granulat, insbesondere Feinsand, eines Größenspektrums von 0,05 bis 0,2 mm, in Aussparungen von gitterartigen Trägern mit einer Vorverdichtung von mindestens 10 %, vorzugsweise mehr, jeweils bezogen auf übliche Gesamtdichten, eingebracht und von porösen Lagen gehalten, die sich wiederum an Rippen einer Abstandhalterung abstützen. Dabei beulen sich die porösen Lagen unter dem Entspannungsdruck des vorverdichteten Granulats aus. Die Granulatzusammensetzung soll dabei möglichst gleichförmig sein, so daß eine Filtrationswirkung im wesentlichen nur längs der dem Filtrat ausgesetzten Oberflächen des Filterelements eintritt und dadurch in Strömungsrichtung hinten liegende Granulatbettbereiche filterunwirksam sind und entbehrlich werden. Diese bekannte Vorrichtung ist verhältnismäßig kompliziert herstellbar, nicht ohne weiteres auf Sandbetten gröberer Körnung übertragbar und wegen der im wesentlichen auch nur oberflächenhaften Filtrationswirkung nicht nur im Wirkungsgrad eingeschränkt, sondern auch auch nur für Fluide mit geringer Suspensabeladung geeignet, da sonst die erforderliche Rückspülhäufigkeit zu groß wird (vergleichbar Mikrogewebefiltern).

Beiden letztgenannten bekannten Vorrichtungen (HU-PS 172 006 und DE-OS 21 36 877) liegt bereits die Zielsetzung zugrunde, ein Granulatbett verhältnismäßig geringer Schichtstärke vorzusehen, ohne daß dies aus den genannten Gründen voll funktionsfähig gelungen ist.

Ein weiterer Nachteil von Filtervorrichtungen mit Granulatbetten bestand bisher darin, daß man sie meist in diskontinuierlichen Abständen mittels des Spülfluids im Gegenstrom reinigen mußte und die Filtervorrichtung während dieser Zeit stillgesetzt werden mußte. Um eine solche Betriebsunterbrechung möglichst selten stattfinden zu lassen, hat man nicht nur die Granulatbetten überdimensioniert, sondern auch eine sehr hohe Schwellgrenze der Beladung mit Schwebstoffen zugelassen, ehe eine Abreinigung erfolgte. Während der exponentiellen Zunahme der Ablagerung von Suspensa im Granulatbett steigt der Strömungswiderstand entsprechend progressiv, und bei gleichbleibendem vorgegebenem Druckabfall am Filter nimmt dann die Strömungsgeschwindigkeit und damit auch die Filtrierleistung rapide ab.

Es ist zwar an sich bekannt, zur Vermeidung dieser Nachteile das schon früher erwähnte zylinderschalenförmige Granulatbett (gemäß HU-PS 172 006) dadurch kontinuierlich abzureinigen, daß die Zylinderschale kontinuierlich um ihre vertikale Achse gedreht und an einem äußeren vertikalen stationären Absaugschlitz vorbeigeführt wird, der dazu dienen soll, aus dem Kernbereich der Zylinderschale Filtrat radial nach außen zurückzusaugen und dabei im Gegenstrom zur normalen Filtrationsrichtung abgeschiedene Schwebstoffpartikel abzuscheiden. Dabei läßt es sich jedoch nicht vermeiden, daß auch zu filtrierende Flüssigkeit von außerhalb der Zylinderschale in einem längs deren Mantel verlaufenden Kurzschlußweg angesaugt wird und es dadurch nicht zu einer hinreichend tiefenwirksamen Abreinigung kommt.

Es ist ferner schon bekannt (NL-PS 51 130), ein konventionelles ununterteiltes Filtertuch, z.B. Metallgewebe, Ledertuch, Papiertuch, zwischen zwei gelochten Trägerplatten einzuspannen und durch einen umlaufenden Rohrarm kontinuierlich abzureinigen, durch welchen ohne Filtrierbetriebsunterbrechung zur sequentiellen Abreinigung Filtrat als Rückspülfluid gepreßt wird. Auch die sequentielle Abreinigung durch Rückspülung bei auf einem Kreis angeordneten gesonderten Filterelementen, bei denen ein Granulatbett nicht offenbart ist, mittels umlaufendem Rückspülarm ist an sich bekannt (DE-OS 27 57 090).

Bei Filtern mit lose eingeschüttetem Granulatbett hat man auch schon eine sequentielle Abreinigung vorgesehen, z.B. mittels eines Saugarmes, der bei zylindrischer Anordnung des Granulatbettes und dessen Unterteilung in sektorförmige Durchlaßkanäle umläuft; dabei wird jedoch im Reinigungsbetrieb das Granulatbett jeweils durch Fluidisierung aufgelockert (z.B. DE-A1-27 33 025).

Schließlich ist es an sich bekannt (US-PS 2 021 919), ein Granulatbett in einzelne voneinander getrennte Abschnitte zu unterteilen, nur um einen in einem Wasserenthärter aufsteigenden Wasserstrom in eine Vielzahl paralleler Stromfäden zu unterteilen und dabei kanalbildende Durchbrüche im Granulatbett zu verhindern. Eine Weiterbildung einer solchen Einrichtung, bei der kanalbildende Zwischenwände nur in einem oberen Bereich des Granulatbettes vorgesehen sind, zeigt die DE-AS 12 84 397.

Der Erfindung liegt demgegenüber die Aufgabe zugrunde, eine Vorrichtung mit den Merkmalen des Oberbegriffs von Anspruch 1 anzustreben, welche mit geringem Granulatmengeneinsatz auskommt, im Dauerbetrieb ihre Filtrationseigenschaften beibehält und eine einfache wirkungsvolle Rückspülung ermöglicht.

Diese Aufgabe wird bei einer Vorrichtung der genannten Art durch die Merkmale des Kennzeichens von Anspruch 1 gelöst.

Bei der Vorrichtung gemäß der Erfindung kann nach einer Alternative das Granulatbett die Gestalt einer Matrix aus aneinander befestigten, z.B. zusammengesinterten, zusammengeschweißten oder zusammengeklebten, Granulatteilchen haben, wie es an sich aus den DE-ASen 30 06 171, 22 32 533 und 14 68 804 oder der DE-OS 27 02 210 bekannt ist.

Bei der Vorrichtung gemäß der Erfindung nach Anspruch 1 sorgt nach der anderen Alternative die am Granulatbett angelegte und selbstnachstellend ausgebildete Kraftquelle dafür, daß die an sich losen Teilchen des Granulats im wesentlichen so relativ zueinander angeordnet bleiben, als wenn sie aneinander befestigt wären. Lediglich im mikroskopischen Bereich kann es dabei zu kleinen Lageänderungen kommen, wie etwa zu einem Tanzen feiner Granulatteilchen in einer relativ groben Pore zwischen größeren Granulatteilchen. Auch wenn sich das Granulatbett unter der Schwerkraft oder unter der Einwirkung der Kompressionskraft setzt, wird es weiterhin integral zusammengehalten. Selbst Abnutzungserscheinungen des Granulats infolge Zerbröckelns von Körnchen oder infolge von Materialabtrag können durch die selbstnachstellende Kraftquelle so ausgeglichen werden, daß praktisch auch im langdauernden Betrieb keine geometrische Umorientierung des filterwirksamen Bereichs des Granulatbetts erfolgt.

Zwar ist es von Granulatbetten aus Ionenaustauscherharzen bereits bekannt, daß diese Ionenaustauscherharze bei ihrer Regeneration quellen; um nach der Quellung das Granulatbett wieder in seinen ursprünglichen Zustand zurückzustellen, wird bei solchen Granulatbetten auf einen Deckel des Granulatbettes eine selbstnachstellende Rückstellkraft nach Art eines Luftkissens ausgeübt (DE-AS 17 86 563 und DE-OS 14 36 294); hierbei geht es aber nur darum, eine das Granulatbett begrenzende Abdeckung gegen den sehr hohen Innendruck beim Quellen des Granulats nachgiebig zu machen und nach Regeneration wieder in seine Ausgangslage zurückführen zu können, nicht jedoch wie bei der Erfindung um ein integrales Zusammenhalten des Granulatbetts während des Filterbetriebes selbst.

Insbesondere für quellbare Ionenaustauscherharze ist es auch schon an sich bekannt (DE-PS 832 596), das Granulatbett mittels eines aufgelegten Sieb- oder Lochbodens mit Flanschführung so zusammenzuhalten, daß dadurch die Bewegung des Materials z.B. nach oben unterbunden oder in eine gewünschte Ordnung gebracht wird. Schließlich ist es auch schon an sich bekannt (DE-PS 586 064), ein Granulatbett aus gegen mechanische Einwirkungen empfindlichem Filtermaterial, wie Aktivkohle, mittels einstellbarer Preßorgane hohlraumfrei zu halten.

Bei einem Granulatbett der erläuterten beiden Alternativen ist zusätzlich die an sich bekannte sequentielle Abreinigungsmöglichkeit vorgesehen. Dadurch, daß der Durchströmungsquerschnitt in mindestens zwei über ihn verteilte, sich längs der Stromrichtung des Fluids erstreckende und voneinander getrennte Durchlaßkanäle unterteilt ist, von denen jeweils ein Anteil für die Filtration und der andere Anteil für die Rückspülung im Reinigungsbetrieb vorgesehen sind, kann man sicherstellen, daß es zu keinen unerwünschten Wechselwirkungen zwischen Filtration und Rückspülung kommt und daß man eine vollständige Reinigung jeweils eines Abschnittes des aus losen Granulatteilchen zusammengehaltenen Granulatbettes oder der Matrix mit einem Minimum an Spülfluid durchführen kann.

Die sequentielle Abreinigung der einzelnen Durchlaßkanäle macht es möglich, ohne Auflösung des Verbandes des Granulatbettes im Reinigungsbetrieb einen kontinuierlichen Filtrierbetrieb zu schaffen, bei dem alle Bereiche des gesamten wirksamen Filtrierquerschnitts sequentiell abgereinigt werden können, ehe es zu merklichen Verstopfungen oder sonstigen störenden Ablagerungen kommt. Insbesondere kann man dabei in überraschender Weise mit geringem Granulatmengeneinsatz - oder spezifischer mit geringen Stärken der Granulatschicht und/oder allgemein geringen Baudimensionen - sogar bisher für gar nicht möglich gehaltene Durchsatzgeschwindigkeiten (über DIN 19643 Ziffer 7.2.2.2. Tabelle 5 bei Anmerkung 15 auf S. 9 hinaus) bei hervorragender Qualität des Filtrats im Dauerbetrieb erreichen. Der Bedarf an Rückspülflüssigkeit ist dabei gering. Auch der vorrichtungsmäßige Gesamtaufwand einschließlich der für das Rückspülen erforderlichen Einrichtung ist relativ einfach. Auch der Wartungsbedarf ist minimal, da selbst im Langzeitbetrieb kaum einmal solche Eingriffe einer Bedienungsperson erforderlich sind, wie sie übliche Sonderfilter im Reinigungsbetrieb mehr oder minder erfordern. Die erfindungsgemäße Vorrichtung läßt sich vollautomatisch betreiben.

Bei normalen Sandfiltern sind Schüttungshöhen in der Größenordnung von einem halben bis einem Meter oder mehr üblich; nunmehr kann man bei Verwendung üblicher Granulatkörnungen mit Gesamtbetthöhen von sogar deutlich unter 10 Zentimetern arbeiten. Somit ermöglicht die Erfindung eine drastische Raum- und damit auch Granulatmengeneinsparung im Vergleich mit konventionellen Granulatfiltern, insbesondere Sandfiltern.

Durch die relativ geringe Dicke und die Betriebskonstanz der Anordnung des Granulatbettes ist auch der Strömungswiderstand minimal. Dadurch sind größere Durchströmungsgeschwindigkeiten und damit auch größere Abscheideleistungen möglich. Wegen des verhältnismäßig geringen Materialbedarfs braucht man sogar nicht mehr auf die besonders preisgünstigen konventionellen Materialien eines Granulatbettfilters zurückzugreifen, sondern kann sogar im Einzelfall hochwertige Granulatmaterialien einsetzen, ohne daß die Filtervorrichtung insgesamt zu teuer wird. Da es ferner nicht mehr erforderlich ist, einzelne Granulate nach ihrem spezifischen Gewicht zu sortieren, sondern jedes Granulat, welches gegen den Kompressionsdruck beständig und mit dem zu filterierenden Fluid verträglich ist, eingesetzt werden kann, hat man viel feiner Möglichkeiten als bisher, auf eine bestimmte Aufgabenstellung einzugehen. Auch ist es nicht mehr kritisch, ob das Granulatbett vertikal aufwärts, vertikal abwärts oder horizontal durchströmt wird, da in jedem Fall der mikroskopische Aufbau des Granulatbettes während der ganzen Betriebsdauer der Vorrichtung im wesentlichen aufrechterhalten werden kann. Es ist dabei sogar möglich, bei bestimmten Strömungsrichtungen Schichtungsstrukturen über die ganze Betriebsdauer der Vorrichtung aufrechtzuerhalten, die bisher bei konventionellen Granulatbetten überhaupt nicht in Betracht kamen.

Die erfindungsgemäße Vorrichtung ist sogar zur Abreinigung von Luft geeignet. Vorzugsweise ist sie jedoch zur Reinigung von Flüssigkeiten bestimmt. Von besonderem Interesse ist der Anwendungsbereich der Reinigung von Abwässern zum Wiedergebrauch. Insbesondere kommen dabei solche Abwässer in Frage, die bereits vorgereinigt sind, z.B. durch eine biologische Kläranlage. Es kommt aber auch die Reinigung anderer Flüssigkeiten, wie beispielsweise chemischer Flüssigkeiten, in Frage. In allen Fällen besticht die Kombination aus geringem Raumbedarf, großer Leistung, geringem Materialaufwand und Preiswürdigkeit in Verbindung mit guten Dauerbetriebseigenschaften. Die erfindungsgemäße Filtriervorrichtung ist durch diese Eigenschaften auch funktionell konkurrenzfähig mit Filtriereinrichtungen anderer Bauart, beispielsweise Filtriereinrichtungen mit Mikrofiltern, geworden, die man bisher noch in vielen Fällen den an sich funktionell oft überlegenen Granulatbettfiltern vorgezogen hat.

Gerade zur Reinigung von Abwässern sind Sandbettfilter, beispielsweise aus gerundetem Quarzsand, besonders geeignet. Es hat sich nämlich gezeigt, daß die noch in biologisch vorgereinigten Abwässern befindlichen Schwebestoffe einen bimodalen Charakter haben, d.h. etwa 50 % der Schwebestoffe haben Abmessungen von etwa 3 bis 5 Mikron und der Rest der Schwebestoffe hat überwiegend Abmessungen zwischen 70 und 80 μm, vgl. Waste Water Engineering a.a.O., S. 233-235, insbes. S. 234, Fig. 6-33. Mikrofilter und ähnliche Filter mit im wesentlichen uniformer porengröße sind hierfür weniger geeignet.

Im letztgenannten Sinne sind vorzugsweise bei einer Vorrichtung nach der zweiten erläuterten Alternative die Kennzeichnungsmerkmale von Anspruch 2 vorgesehen. Eine derartige Schichtung ist an sich bei einem Granulatbett bekannt (DE-AS 1 125 889).

Keine der bekannten Vorrichtungen sieht aber eine selbstnachstellende Kraftquelle dazu vor, eine Schichtung eines Sandbettes oder vergleichbaren sonstigen Granulatbetts permanent aufrechtzuerhalten. Bei selbstnachstellenden Kraftquellen zum Zusammenhalten von Granulat uniformer Körnchendimensionen stellt sich von vornherein nicht das problem einer Entmischung eines geschichteten Granulatbettes. Die Merkmale von Anspruch 2 machen es möglich, nicht nur mit geringen Schichtstärken, sondern auch mit einem besonders hohen Nutzungsgrad mit Tiefenabscheidewirkung eine besonders große Betriebszuverlässigkeit zu erreichen. Es wird nunmehr sogar möglich, selbst mit Sandfiltern üblichen Feinheitsgrades, also auch mit einem Anteil von Sandgranulaten relativ grober Körnung, sehr dünnschichtige Filterelemente zu bauen, die einen hohen Tiefenabscheidungsgrad auch im Dauerbetrieb besitzen.

Es hat sich darüber hinaus gezeigt, daß man mit größeren poren als bisher bei Sandfiltern üblich arbeiten kann, da die Schichtung des Granulatbetts zur Folge hat, daß sich in Strömungsrichtung des Fluids vorne liegende grobe Poren trichterartig in Strömungsrichtung des zu filterierenden Fluids verjüngen. Überraschenderweise hat es sich gezeigt, daß man sogar sehr kleine Schwebstoffteilchen unter Anwendung verhältnismäßig groben Granulates abscheiden kann. Dieses Phänomen ist wahrscheinlich darauf zurückzuführen, daß die Poren bei geeigneter Schichtung des Granulates in Filtrierrichtung labyrinthartig trichterförmig kleiner werden und sich in dem Filterbett wie eine große Anzahl von flaschenhalsartigen Fallen verhalten. In deren Volumen finden wahrscheinlich Verwirbelungen statt, welche ein Zusammenballen größerer Suspensionsflocken mit kleineren Flocken ergeben, die vorher eingefangen wurden. Wegen der trichterförmigen Gestalt eines sich von Grobkörnigkeit nach Feinkörnigkeit schichtenden Granulatbettes ist dabei eine bequeme Reinigung durch das Spülfluid im Rückstrom möglich, ohne noch eine Fluidisierung des Granulatbettes für Reinigungszwecke zu benötigen.

Eine zu Anspruch 2 alternative zweckmäßige Gestaltungsmöglichkeit eines im Rahmen von Anspruch 1 möglichen ungeschichteten Granulatbetts sieht Anspruch 3 vor. Zwar wird dabei auf die ausgeprägte trichterförmige Tiefenwirkung verzichtet; die spezielle Granulatzusammensetzung mit verschiedenen Korngrößen dürfte jedoch noch eine selektivere Tiefenabscheidung als bei einem ungeschichteten Granulatbett mit nur einer Korngröße ergeben.

Wenn auch bei den Ausführungsformen nach Anspruch 2 oder 3 schon Anordnungen mit nur zwei oder weniger Korngrößen in Frage kommen, ist es doch zweckmäßig, ein breites Korngrößenspektrum vorzusehen.

Es ist grundsätzlich möglich, das Granulatbett durch eine in Querrichtung wirkende Kompressionskraft zusammenzuhalten, etwa durch eine elastische seitliche Bandage. Mit minimaler Kraftaufwendung kommt man jedoch aus, wenn die Kraft der Kraftquelle längs des Fluidstroms angelegt ist (Anspruch 4).

Aus Gründen baulicher Vereinfachung wird man im allgemeinen die Kraft der Kraftquelle permanent am Granulatbett anlegen (Anspruch 5). Es kann jedoch ausreichen, daß der Fluidstrom jeweils vertikal verläuft und die Kraft der Kraftquelle an dem Granulatbett nur bei Betrieb mit Stromrichtung von unten nach oben angelegt ist (Anspruch 6), da bei Betrieb mit Stromrichtung von oben nach unten mit einer Umschichtung praktisch weniger zu rechnen ist. Die Kraft der Kraftquelle kann einstellbar sein (Anspruch 7), wie es an sich aus der DE-PS 586 064 (S. 1, Z. 1 bis 41) bekannt ist.

Als selbstnachstellende Kraftquelle kann eine Hydraulikquelle mit Rücklaufsperre dienen (Anspruch 8). Diese relativ komplizierte Anordnung hat den Vorteil, daß die Nachstellung praktisch nur in Kompressionsrichtung, nicht jedoch in Gegenrichtung, Spiel hat. Ähnliches kann man erreichen, wenn die Kraftquelle eine federnde Einrichtung ist (Anspruch 9) und die Feder in ihrer Ursprungsstellung nicht zusammendrückbar gespannt ist, wie etwa eine flachgestellte Tellerfeder oder eine Druckfeder, die bis in axialer Anlage ihrer Windungen zusammengedrückt ist. Aber auch eine gewisse elastische Rückfederungsmöglichkeit ist nicht schädlich, solange die von einer federnden Einrichtung ausgeübte Kompressionskraft stärker als die auftretenden Kräfte im Betrieb der Vorrichtung, insbesondere die Druckunterschiede aufgrund der Fluidströmung, ist. Vorzugsweise ist die federnde Einrichtung gemäß Anspruch 10 ausgebildet.

Die erfindungsgemäße Vorrichtung läßt sich konstruktiv besonders einfach dann gewinnen, wenn das Granulat zwischen zwei längs des Fluidstromes aufeinanderfolgenden Abdeckungen gehalten ist, welche für die Fluide durchlässig, für das Granulat aber undurchlässig sind, und wenn dabei die Kraftquelle den Abstand der Abdeckungen voneinander zu verkleinern sucht (Anspruch 11). Dies ist an sich bekannt (DE-PS 586 064, S. 1, Z. 1 bis 41). Dabei kann in besonders einfacher Weise die eine Abdeckung stationär und die andere Abdeckung beweglich angeordnet sein (Anspruch 12). Dann ist die stationäre Abdeckung zweckmäßig an einem Träger für auswechselbare Granulatbetten ausgebildet (Anspruch 13), so daß man dasselbe Gehäuse der Vorrichtung schnell für unterschiedlichen Filtrationsbetrieb umrüsten kann, wobei jeder Umrüstsatz einfach und billig in Anpassung an die gewünschte Funktion herstellbar ist. Es ist dabei konstruktiv zweckmäßig, wenn eine als Kraftquelle dienende federnde Einrichtung an dem Träger abgestützt ist (Anspruch 14).

Vorzugsweise ist nach der Erfindung vorgesehen, daß eine solche Anzahl von Durchlaßkanälen vorgesehen ist, daß im Filtrierbetrieb der überwiegende Anteil des Durchströmungsquerschnitts ständig für den Filtrierbetrieb zur Verfügung steht (Anspruch 15). Im Grenzfall kann dabei fast die gesamte Durchströmungsfläche ständig für den Filtrationsbetrieb zur Verfügung stehen. Wenn man nur einen kleinen Anteil der Durchströmungsfläche reinigt, ist es dabei möglich, die Reinigung dieses Anteils in relativ kurzer Zeit und mit geringem Bedarf an Spülfluid vorzunehmen. Durch Wandern der Abreinigung längs des Durchströmungsquerschnitts ist es dabei möglich, bei allmählicher Abreinigung des gesamten Durchströmungsquerschnitts einen bestimmten Durchlaßkanal in relativ kurzen Zeitperioden jeweils wieder neu zu reinigen und so sicherzustellen, daß auf den verschiedenen Querschnittbereichen des Durchströmungsquerschnitts überhaupt nur eine relativ geringe Ablagerung von abgeschiedenen Schwebstoffen erfolgt. Es reicht dabei aus, wenn jeweils nur ein Durchlaßkanal im Reinigungsbetrieb vom Spülfluid beaufschlagbar ist (Anspruch 16). Wenn man beispielsweise den gesamten Durchströmungsquerschnitt in zwanzig Durchlaßkanäle unterteilt, braucht dabei jeweils nur ein Durchlaßkanal für die Reinigung zur Verfügung zu stehen, also insgessamt nur ein Flächenbereich von 5 %.

Die nahezu gleichmäßige Sauberhaltung des gesamten Strömungsquerschnitts des Granulatbettes ermöglicht es auch, die erforderliche Dicke des Granulatbettes noch weiter zu senken, als wenn diskontinuierlich abgereinigt würde. Ferner hat das Granulatbett praktisch über die gesamte Betriebszeit annähernd konstante Betriebsverhältnisse.

Die als Beispiel genannte Zahl von zwanzig Durchlaßkanälen ist nur beispielhaft gemeint. Es können auch etwas weniger Durchlaßkanäle ohne wesentliche Beeinträchtigung der Betriebsweise vorgesehen sein, ebenso aber auch noch wesentlich mehr.

Wie bei der bekannten kontinuierlich reinigenden Vorrichtung ist es grundsätzlich möglich, den Anschluß für das Spülfluid auch hier kontinuierlich über den Strömungsquerschnitt des Granulatbettes zu führen. Zweckmäßiger ist es jedoch, wenn der Anschluß für das Spülfluid schrittweise weitergeschaltet wird (Anspruch 17) und unwirksam ist, wenn er nicht mit einem für die Reinigung vorgesehenen Durchlaßkanal kommuniziert.

Die Reinigung ist am wirkungsvollsten, wenn der Anschluß für Spülfluid abgedichtet an die jeweils zugeordnete Mündung des Durchlaßkanals anschließbar ist (Anspruch 18), so daß kein Kurzschlußstrom in Querrichtung auftritt.

Vorzugsweise ist der Anschluß für das Spülfluid an eine Senke desselben nur angeschlossen, wenn der Anschluß mit der zugeordneten Mündung des im Reinigungsbetrieb jeweils zugeordneten Durchlaßkanals, oder mehrerer derselben, kommuniziert (Anspruch 19).

Die Reinigungswirkung kann man erhöhen, wenn in den Durchlaßkanälen die Strömungsgeschwindigkeit des Spülfluids während des Reinigungsbetriebes jeweils größer als die Strömungsgeschwindigkeit des zu filtrierenden Fluids während des Filtrierbetriebs ist (Anspruch 20). Flüssigkeitsfilter stehen typischerweise unter einem Druck von etwa einer Atmosphäre Überdruck, also unter einem Überdruck von etwa 10 m WS. Man ist andererseits geneigt, an Granulatfiltern einen Druckabfall von nicht mehr als 2 bis 3 m WS anzulegen. Wenn andererseits der Anschluß des Spülfluids frei von Überdruck ist, kommt man ohne weiteres auf drei- bis viermal höhere Druckabfälle in dem betreffenden Durchlaßkanal während des Reinigungsbetriebes als im Filtrierbetrieb. Wegen der Abhängigkeit des Druckabfalls vom Quadrat der Strömungsgeschwindigkeit ist es dann ohne weiteres möglich, wenn die Strömungsgeschwindigkeit beim Reinigungsbetrieb mindestens um etwa das 1,5-fache oder mehr größer als beim Filtrierbetrieb ist (Anspruch 21). Eine solche Drucküberhöhung beim Reinigungsbetrieb wird auch unabhängig von den beispielhaft genannten Druckbedingungen bevorzugt.

Die Durchströmungsgeschwindigkeit beim Abreinigen kann man sogar noch dadurch beeinflussen und erhöhen, wenn man den Anschluß des Spülfluids an einen saugenden Unterdruck anlegt. Dann reicht es sogar aus, wenn der Druck, unter dem das Granulatbett in der Filtriervorrichtung steht, nur unwesentlich über Null liegt, so daß er gerade den für den Filtrationsbetrieb erforderlichen Druckabfall über dem Granulatbett bewirkt.

Vorzugsweise ist eine Einrichtung zum impulsweisen Durchleiten des Spülfluids durch den jeweiligen Durchlaßkanal im Reinigungsbetrieb vorgesehen (Anspruch 22). Ein derartiger Impulsbetrieb hat den weiteren Vorteil, festgesetzte Schwebstoffteilchen durch Druckstoß aus dem Granulatbett sicher lösen zu können, ohne dabei eine Fluidisierung des Granulatbettes zu benötigen. Zweckmäßig ist sogar jeder Durchlaßkanal im Reinigungsbetrieb vor dem Weiterschalten zum jeweils nächsten Durchlaßkanal mit mehreren Impulsen des Spülfluids beaufschlagbar (Anspruch 23).

Ein besonders kompakter Aufbau der erfindungsgemäßen Vorrichtung ergibt sich, wenn das Granulatbett zylindrisch ausgebildet ist, die Durchlaßkanäle über den Umfang des Granulatbettes verteilte Sektoren bilden und der Anschluß für das Spülfluid um die Achse des Granulatbettes schwenkbar ist (Anspruch 24). Der Durchlaßquerschnitt des Anschlusses kann dann zu dem sektorförmigen Querschnitt des jeweiligen Durchlaßkanals komplementär sein (Anspruch 25).

Hierbei ergeben sich zwei besonders bevorzugte Anordnungsweisen. Nach der einen Anordnungsweise ist die Achse des Granulatbettes vertikal gerichtet und wird das Granulatbett auch Vertikal durchströmt (Anspruch 26). Nach der anderen Anordnungsweise ist die Achse des Granulatbettes horizontal gerichtet und das Granulatbett dann auch horizontal durchströmt (Anspruch 27).

Die Durchlaßkanäle können nebeneinander liegen; dann ist zweckmäßig der Anschluß des Spülfluids in Richtung der Streifenfolge hin und her bewegbar (Anspruch 28).

Um sicherzustellen, daß nicht die weiter innen gelegenen Durchlaßkanäle häufiger abgereinigt werden als die außen gelegenen Durchlaßkanäle, ist zweckmäßig vorgesehen, daß die spezifische Spülzeit jedes Streifens gleich gewählt ist (Anspruch 29). Dies kann man durch entsprechende Wahl der Verweilzeit des Anschlusses des Spülfluids in Kommunikation mit einem bestimmten Durchlaßkanal und/oder durch entsprechende Wahl der Dauer der jeweiligen Spülungen vorprogrammiert einstellen.

Eine weitere Funktion mindestens einer Begrenzungswand, vorzugsweise aller Begrenzungswände, von Durchlaßkanälen kann die sein, als Abstützung für eine als Kraftquelle dienende federnde Einrichtung zu wirken (Anspruch 30) und so zwischen Boden des Granulatbettes und einem verschiebbaren, von der Kraft beaufschlagten Deckel über die betreffende Zwischenwand einen Kraftschluß herzustellen.

Andererseits darf eine Zwischenwand zwischen Durchlaßkanälen nicht die Kompression des Granulatbettes behindern. Um hier eine unerwünschte Wechselwirkung sicher zu vermeiden, kann beispielsweise vorgesehen sein, daß sich die Durchlaßkanäle nur über einen Teil der Durchströmungslänge der Granulatpackung erstrecken und dabei der in Strömungsrichtung des zu filtrierenden Fluids folgende Bereich von grobkörnigem und fließfähigem Granulat angefüllt ist, das über den ganzen Strömungsquerschnitt verteilt Abstand zu den Zwischenwänden zwischen den Durchlaßkanälen hält und in das die Zwischenwände bei fortschreitender Kompression des Granulatbettes, also der Matrix oder des aus losen Granulatteilchen zusammengehaltenen Granulatbetts, eindringen können (Anspruch 31). Dies gilt auch dann, wenn nur eine einzige Zwischenwand vorgesehen ist. Alternativ könnte man einen Auflagedeckel auf dem Granulatbett mit Ausnehmungen ausbilden, in welche die jeweilige Zwischenwand eindringen kann. Die grobkörnige Abstandhalteschicht stellt jedoch eine besonders einfache konstruktive Lösung dar, die zugleich Verteilaufgaben für den Anteil des bereits filtrierten Filtrats erfüllt, welches für Spülzwecke weiterverwendet wird. Ein Querschluß des bereits filtrierten Fluids für Rückspülzwecke erfolgt hier also mit Sicherheit erst, wenn das Fluid bereits vollständig in dem Granulat gereinigt ist, und nicht wie bei der erwähnten bekannten Vorrichtung schon in der Eintrittszone des Granulatbettes.

Die erfindungsgemäße Vorrichtung ist nicht darauf beschränkt, daß das Granulat beim Filtrierbetrieb nicht quillt oder im Sinne der Ansprüche 2 und 3 mehrere Korngrößen, eventuell geschichtet, enthält. Im Sinne normaler Filtertechnik nach Art von Sand- oder Quarzfiltern sind jedoch z.B. Granulate zweckmäßig, die beim Filtrierbetrieb nicht quellen.

Die Erfindung wird in folgenden anhand schematischer Zeichnungen an mehreren Ausführungsbeispielen noch näher erläutert.

Es zeigen:

Fig. 1 eine teilweise in verschiedener axialer Höhe horizontal geschnittene Draufsicht auf den Einbau einer ersten Filtrationsvorrichtung gemäß der Erfindung;

Fig. 2 einen vertikalen axialen Schnitt durch die Vorrichtung gemäß Fig. 1;

Fig. 3 eine Draufsicht auf einen bei der Vorrichtung gemäß Fig. 1 und Fig. 2 verwendeten Rückspülarm;

Fig. 4 eine Teilansicht einer mechanoelektrischen Steuerung der Vorrichtung gemäß Fig. 1 bis 3;

Fig. 5 und 6 zwei alternative Rückspüldiagramme;

Fig. 7 einen axialen vertikalen Schnitt durch eine zweite Filtriervorrichtung gemäß der Erfindung; und

Fig. 8 einen vertikalen Längsschnitt sowie

Fig. 9 einen vertikalen Querschnitt durch eine dritte Filtriervorrichtung gemäß der Erfindung.

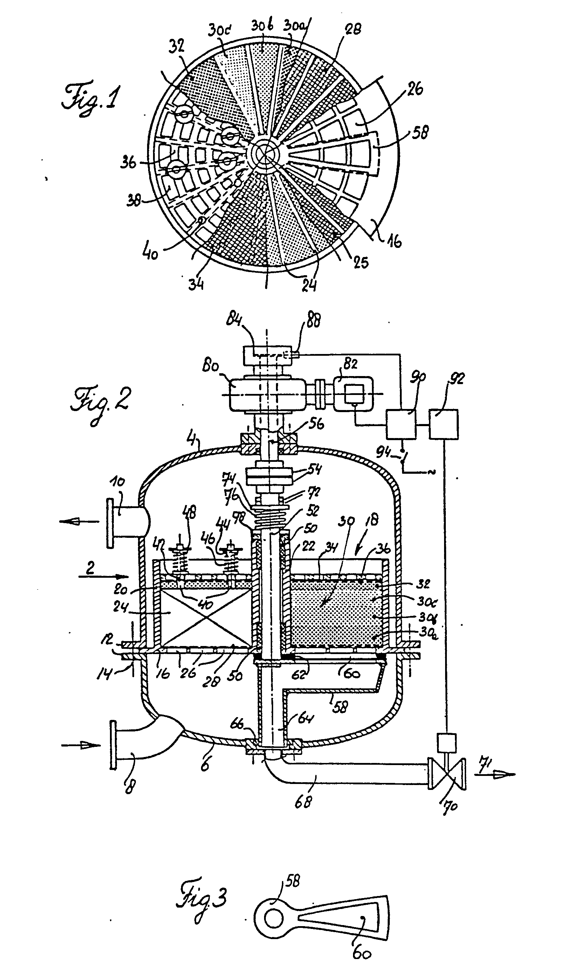

Die in den Fig. 1 bis 4 dargestellte erste Filtriervorrichtung weist ein im wesentlichen zylinderförmiges Gehäuse 2 mit vertikaler Achse auf, welches im wesentlichen aus einem Oberteil 4 und einem Unterteil 6 zusammengesetzt ist. Boden und Dach des Gehäuses sind dabei gewölbt ausgebildet; Oberteil und Unterteil sind im Bereich des zylindrischen Mantels des Gehäuses aneinander angeschlossen.

Das Unterteil 6 weist einen Eintrittsstutzen 8 für das zu filtrierende Fluid, vorzugsweise eine Flüssigkeit, und das Oberteil 4 einen Austrittsstutzen 10 für das Filtrat auf.

In ihrem Anschlußbereich sind Oberteil und Unterteil mit Verbindungsflanschen 12 ausgebildet, die an über den Umfang verteilten Stellen 14 miteinander durch Schraubbolzen verbindbar sind und zwischen denen eine Trägerplatte 16 für einen Einsatz 18 im Gehäuse eingeklemmt ist, welcher den eigentlichen filterwirksamen Teil der Vorrichtung bildet.

Von der Trägerplatte 16 erstrecken sich in Nachbarschaft des Gehäuses 2 ein zylindrischer Außenmantel 20 und um die Achse der Vorrichtung eine Nabe 22 jeweils über eine beschränkte axiale Länge nach oben; Außenmantel 20 und Nabe 22 sind an der Trägerplatte 16 befestigt. Der Ringraum zwischen Außenmantel und Nabe ist in eine Vielzahl, hier zwanzig, gleichgroßer Sektoren durch sich radial erstreckende Zwischenwände 24 fluiddicht unterteilt, welche eine geringere axiale Länge als der Außenmantel 20 haben. Der jedem einzelnen Sektor gegenüberliegende Bereich der Trägerplatte 16 ist mit einer radialen Folge von sich zwischen den Zwischenwänden erstreckenden gekrümmten streifenförmigen Öffnungen 26 versehen. Auf die Trägerplatte 16 ist jeweils ein sektorförmiges Siebnetz 28 aufgelegt.

In jedem Sektor ist oberhalb des Siebnetzes 28 ein geschichtetes Granulatbett 30 angeordnet, welches sich über die Höhe der Zwischenwände 24 erstreckt. Dargestellt ist hier ein dreischichtiger Aufbau aus einer dem Siebnetz 28 benachbarten relativ grobkörnigen ersten Schicht 30a, einer dieser nach oben hin folgenden Schicht mittlerer Körnung 30b und einer dieser wiederum folgenden feinkörnigen Granulatschicht 30c. Dieser dreischichtige Aufbau ist nur rein beispielsweise zu verstehen und es kann jeder andere geschichtete Aufbau vorgesehen sein, bei dem beispielsweise eine Vielzahl von Schichten vorgesehen ist, bei denen die Korngröße graduell von unten nach oben abnimmt.

Oberhalb der feinkörnigsten Schicht 30c und zugleich oberhalb der Zwischenwände 24 erstreckt sich über den ganzen Ringraum zwischen Nabe 22 und Außenmantel 20 verteilt eine grobkörnige Granulatschicht 32 aus fließfähigem, beispielsweise gerundetem, Granulat. Die dieser Granulatschicht 32 benachbarten Stirnseiten der Zwischenwände 24 sind stromlinienförmig abgerundet ausgebildet.

Auf die Granulatschicht 32 ist wiederum ein Siebnetz 34 aufgelegt, welches sich über den ganzen Umfang des Granulatbettes 30 zwischen der Nabe 22 und dem Außenmantel 20 erstreckt. Auf dem Siebnetz 34 liegt ein gelochter kreisscheibenförmiger Deckel 36 auf. Dessen Lochung 38 kann grundsätzlich kontinuierlich verteilt sein, ist hier jedoch den einzelnen Sektoren gegenüberliegend und mit etwas geringerer Querschnittsgröße als die Öffnungen 26 in ähnlicher Weise wie diese streifenförmig radial längs der Sektoren verteilt.

Vom oberen Rand jeder zweiten Zwischenwand 24 aus erstrecken sich zwei Standbolzen 40 jeweils nach oben und durch ein Loch 42 im Deckel 36 hindurch nach außen. Der eine Standbolzen 40 ist in Nachbarschaft des Außenmantels 20, der andere in Nachbarschaft der Nabe 22 angeordnet. Das freie Ende jedes Standbolzens 40 ist jeweils als Gewinde ausgebildet, auf dem jeweils eine Einstellmutter 44 axial verstellbar ist. Zwischen der jeweiligen Einstellmutter 44 und dem Deckel 36 ist jeweils eine mechanische schraubenförmige Druckfeder 46 eingespannt, deren Vorspannung durch Verstellung der Einstellmutter 44 frei wählbar ist. Eine gewählte Stellung kann man beispielsweise mittels eines Sicherungsstiftes 48 fixieren. Die Druckfedern 46 bilden gemeinsam eine federnde Einrichtung, die als Kraftquelle dient, um auf das Granulatbett 30 mitsamt der grobkörnigen Granulatschicht 32 eine solche Kompression auszuüben, welche die relative Lage der Granulatteilchen zueinander im Granulatbett unter allen im folgenden noch näher zu erläuternden Betriebsbedingungen im wesentlichen permanent gleichhält.

Sollte dabei ein Setzen des Granulatbettes 30 und/oder der Granulatschicht 32 eintreten oder durch Abrieb oder Lösungserscheinungen ein Abbau des Granulatbettes erfolgen, ist die Kompressionskraft so gewählt, daß eine selbsttätige Nachstellung erfolgt und die erwähnte relative Lage der Granulatteilchen dabei grundsätzlich unberührt bleibt. Gegebenenfalls kann man nach einer gewissen Nachstellstrecke auch die Einstellmutter 44 nachstellen.

Das Siebnetz 28 sowie das Siebnetz 34 in kombinierter Wirkung mit der Granulatschicht 32 sind so gewählt und dimensioniert, daß Granulatteilchen beliebiger Körnung zwischen den beiden genannten stirnseitigen Einfassungen des Granulatbettes gehalten sind, aber ein Durchgang von zu filtrierendem Fluid und von Spülfluid möglich ist.

Die Nabe 22 ist an ihren beiden axialen Enden jeweils mit Lagerbuchsen 50 für eine Welle 52 versehen, welche sich von der Unterseite der Trägerplatte 16 durch die Nabe 52 nach oben erstreckt und mittels einer Kupplung 54 an eine abgedichtet durch das Oberteil 4 zentral hindurchgeführte Antriebswelle 56 lösbar angekoppelt ist.

Mit dem unteren Ende der Welle 52 ist ein sich radial erstreckender Rückspülarm 58 fest verbunden. Dieser weist eine als Anschluß 60 für Spülfluid dienende Öffnung auf, die komplementär zu den Öffnungen 26 eines Sektors des Granulatbettes 30 als ein Sektor ausgebildet ist. Zwischen der der Trägerplatte 16 zugewandten Seite des Rückspülarms 58 und der Unterseite der Trägerplatte 16 ist eine elastisch nachgebende Dichtplatte 62 zwischengeschaltet, die am Rückspülarm 58 befestigt ist und von diesem bei Drehung der Welle 52 mitgeführt wird. Die Dichtplatte 62 ist entsprechend der Anschlußöffnung 60 ausgespart und dient dazu, den Rückspülarm dann, wenn er sich unter einem bestimmten Sektor befindet, frei durch die Trägerplatte 16 hindurch mit dem im betreffenden Sektor befindlichen Granulatbett kommunizieren zu lassen, zugleich aber einen seitlichen Kurzschlußstrom zwischen Rückspülarm 58 und Trägerarm 16 durch vollständige Abdichtung auszuschließen. Die Dichtplatte 62 kann beispielsweise aus einem synthetischen Gummi bestehen.

Bei Drehung der Welle 52 läßt sich somit der Rückspülarm 58 in Kommunikation mit jedem der zwanzig Sektoren des Granulatbettes bringen, die jeder für sich einen Durchlaßkanal 25 bilden.

Fluchtend mit der Welle 52 ist der Rückspülarm 58 nach unten zu in einem Rohr 64 verlängert, welches durch eine Drehdichtung 66 durch das Unterteil 6 nach außen an ein Rohr 68 angeschlossen ist, welches über ein Steuerventil, beispielsweise Magnetventil oder pneumatisches Ventil, 70 an eine Senke 71 für Spülflüssigkeit angeschlossen ist. Diese Senke kann entweder ein auf atmosphärischem Druck befindlicher Sammelbehälter oder gar eine unter absaugendem Vakuum arbeitende Sammeleinrichtung sein, beispielsweise die Kombination einer saugenden Förderpumpe mit einem entsprechenden Sammelgefäß.

Der aus der Nabe 22 hervorstehende Abschnitt der Welle 52 ist mit einem Gewinde versehen, auf welche ein Paar von sich gegenseitig konternden Stellmuttern 72 axial verstellbar ist. Unter den Stellmuttern 72 ist eine Beilegscheibe 74 angeordnet, die zur Abstützung einer Druckfeder 76 dient, welche auf die Verlängerung der Welle 52 aufgeschoben ist und sich an ihrer anderen Stirnseite an der oberen freien Stirnfläche der Nabe 22 über eine weitere Beilegscheibe 78 abstützt. Die Druckfeder 76 dient dazu, den Spülarm 58 stets unter Vorspannung mitsamt seiner Dichtplatte 62 an die Unterseite der Trägerplatte 16 anzudrücken und so auch bei Abnutzung der Dichtung kontinuierliche Dichtwirkung sicherzustellen.

Die Antriebswelle 56 ist außerhalb des Gehäuses 2 mit einer Antriebseinheit verbunden, von der in Fig. 2 ein Getriebekasten 80 und ein Stellmotor 82 zu sehen sind. Der Getriebekasten 80 enthält ein Stellgetriebe, beispielsweise ein Schneckengetriebe.

In Verlängerung des Getriebekastens 80 trägt die Antriebswelle 56 ein Schaltrad 84 mit zwanzig Schaltzähnen 86, die äquidistant über den Umfang des Schaltrades 84 verteilt sind und deren Anzahl allgemein der Anzahl der Sektoren des Granulatbettes entspricht.

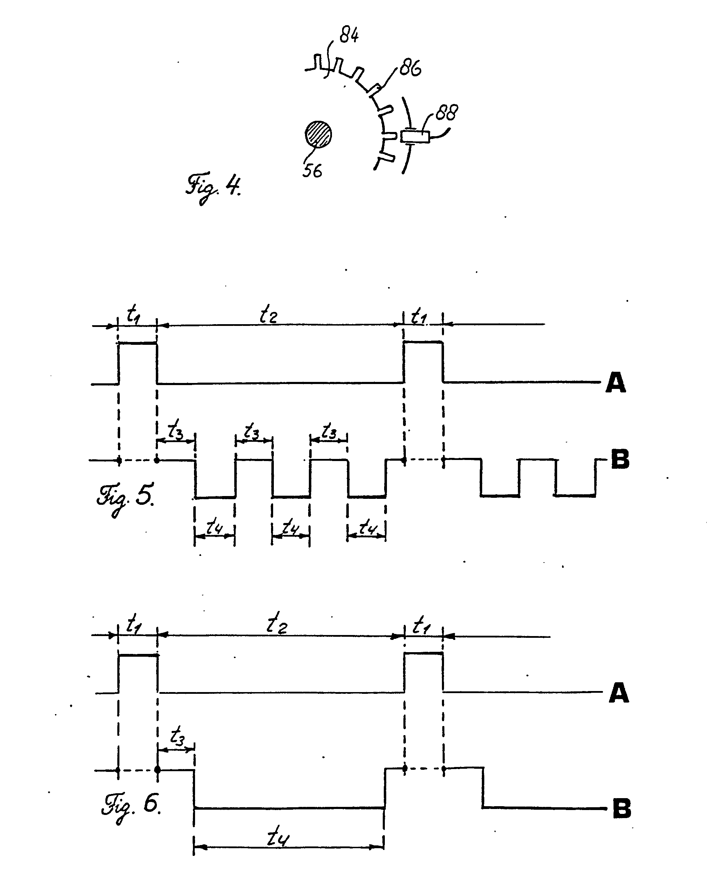

Die Schaltzähne 86 wirken mit einem berührungslosen, z.B. induktiven, Annäherungsschalter 88 zusammen (vgl. auch Fig. 4).

Der Stellmotor 82 wird über ein erstes elektronisches Zeitrelais 90 angesteuert, welches über eine Hilfssteuerleitung mit dem Annäherungsschalter 88 verbunden ist. Das erste Zeitrelais 90 dient ferner zur Schaltung eines zweiten elektronischen Zeitrelais 92, welches das Steuerventil 70 schaltet.

Zwei mögliche Arten der Steuerung sind in den Fig. 5 und 6 dargestellt. Zunächst sei die einfachere Steuerung von Fig. 6 betrachtet.

Bei Einschalten des mit dem ersten Zeitrelais 90 Verbundenen Hauptschalters 94, welcher an die Stromquelle, hier eine Wechselstromquelle, angeschlossen ist, ist der Stellmotor 82 während der Zeit t1 an den Netzstrom angeschlossen und dreht die Welle 52 und mit ihr den Rückspülarm 58. Die Zeit t1 ist beendet, wenn sich ein Schaltzahn 86 dem Annäherungsfühler 88 nähert und über die Hilfssteuerleitung das erste Zeitrelais 90 einschaltet. In diesem Zeitpunkt kommuniziert der Rückspülarm 58 mit einem bestimmten Sektor des Granulatbettes.

Das erste Zeitrelais 90 schaltet dann für eine bestimmte Zeit t2 das zweite Zeitrelais 92 zu. Dieses hat eine doppelte Zeitfunktion. Zunächst kann man um die Zeit t3 das Wirksamwerden des Zeitrelais 92 verzögern. Wenn sich dann das Zeitrelais 92 einschaltet, tastet es für eine vorgegebene Zeit t4 das Steuerventil 70 auf, so daß dann während dieser Zeit t4 an dem angeschlossenen Sektor ein Rückspülvorgang stattfindet. Die Summe der Zeiten t3 und t4 ist so zu bemessen, daß sie kleiner oder höchstens gleich der Zeit t2 ist.

Nach Ablauf der Zeit t2 schaltet sich der Stellmotor 82 wieder ein, das zweite Zeitrelais 92 wird ausgeschaltet, der Rückspülarm bewegt sich in Richtung zum nächstfolgenden Sektor des Granulatbettes und der beschriebene Spülzyklus beginnt von neuem.

In Fig. 6, und auch in Fig. 5, bezeichnet die Bezugslinie A die Schaltzeiten des ersten Zeitrelais 90 und die Bezugslinie B jeweils die Schaltzeiten des zweiten Zeitrelais 92.

Die Einschaltung des Steuerventils 70 erfolgt zweckmäßig stets so, daß der Spülstrom mit einer rechteckigen Einschaltcharakteristik stoßweise einsetzt.

Bei der Betriebsweise gemäß Fig. 5 ist noch deutlicher auf einen stoßweisen Spülbetrieb abgestellt, in dem jeweils die Spülzeit t4 gemäß Fig. 6 in mehrere, hier drei, Spülimpulse t4 unterteilt ist, die zur Vereinfachung der Schaltung jeweils einen zeitlichen Abstand t3 haben, gegebenenfalls aber auch noch gegenüber t3 unterschiedliche Zeitabstände haben könnten.

Typische Zeiten sind bei der Betriebsweise gemäß Fig. 5:
t1 = 3 s,
t2 = 120 s,
t3 = 20 s,
t4 = 15 s.

Bei der gleichen Einstellung dauert bei der Betriebsweise gemäß Fig. 6 dann t4 85 s, während t1, t2 und t2 gleich wie im Beispiel gemäß Fig. 5 sind.

Zweckmäßig kann man Zeitrelais 90 und 92 wählen, bei denen die genannten Zeiten zwischen 1 s und 500 s frei wählbar sind.

Bei der zweiten Filtriervorrichtung gemäß Fig. 7 ist die Bauweise des Einsatzes 18, welcher von der Trägerplatte 16 getragen ist, ebenso wie bei der vorher beschriebenen ersten Filtriervorrichtung, so daß zur Vermeidung von Wiederholungen auf deren Beschreibung verwiesen werden kann.

Der Unterschied liegt lediglich darin, daß die Achse des Einsatzes 18 nicht vertikal, sondern horizontal ausgerichtet ist.

Das Gehäuse 2 ist wiederum aus zwei Teilen 106 und 104 zusammengesetzt, welche zwischen Flanschen 112 die Trägerplatte 16 einklemmen. Auch insoweit ist die Bauweise gleichartig wie im Fall der ersten Filtriervorrichtung. Der Eintrittsstutzen 108 und der Austrittsstutzen 110 sind hier jedoch axial fluchtend horizontal ausgerichtet, während sie bei der ersten Filtriervorrichtung vertikal übereinander seitlich oder stirnseitig angeordnet sind.

Aufgrund der von den Druckfedern 46 auf das Granulatbett ausgeübten und im Zusammenhang mit der ersten Filtriervorrichtung mehr im einzelnen besprochenen Kompressionskraft kommt es auch bei der Anordnung der Schichten gemäß Fig. 7, bei der sich die Schichten vertikal erstrecken und die Korngröße in horizontaler Richtung abnimmt, nicht zu unerwünschten Umordnungen im Granulatbett.

Auch bezüglich der Betriebsweise des Rückspülarms 58 und des Antriebs der Welle 52 kann im wesentlichen auf die erste Filtriervorrichtung verwiesen werden. Unterschiede liegen in folgendem:

Das Rohr 64 ist über die Drehdichtung 66 hier nicht direkt mit einem Teil des Gehäuses 2, sondern mit einem Rohrwinkelstück 96 verbunden, welches mit einem Rohr 98 kommuniziert, welches dicht durch den Teil 106 des Gehäuses 2 hindurchgeführt ist und mit dem Steuerventil 70 strömungsmäßig verbunden ist.

Andererseits ist die mit der Welle 52 verbundene Kupplung 54 an ein Winkelgetriebe 100 angeschlossen, welches noch innerhalb des Gehäuses 2 gelegen ist und dessen Antriebswelle 102 durch das Gehäuse zu dem Getriebekasten 80 führt, an welchem die Antriebswelle 102 angeflanscht ist. Der Antrieb der Antriebswelle 102 zum Antreiben der Welle 52 und damit des Rückspülarmes einerseits und andererseits die Steuerung des Steuerventils 70 erfolgen genauso, wie für die erste Filtriervorrichtung beschrieben.

Sowohl bei der ersten Filtriervorrichtung als auch bei der zweiten Filtriervorrichtung lassen sich der Einsatz 18 mitsamt Trägerboden 16 sowie Rückspülarm 58 leicht auswechseln. Beispielsweise kann man je nach dem Anteil von Schwebstoffen in einem zu filtrierenden Fluid oder nach der Art des zu filtrierenden Fluids, beispielsweise einer Flüssigkeit, unterschiedliche Filtrierbetten mit angepaßtem Akkumulationsvermögen wählen. Zum Beispiel kann man die Stärke des filterwirksamen Granulatbettes zwischen 50 und 300 mm wählen sowie die Korngrößen in einzelnen Schichten und die relative Dicke solcher Schichten ebenso wie die Art des gewählten Granulats an die jeweilige Aufgabe anpassen.

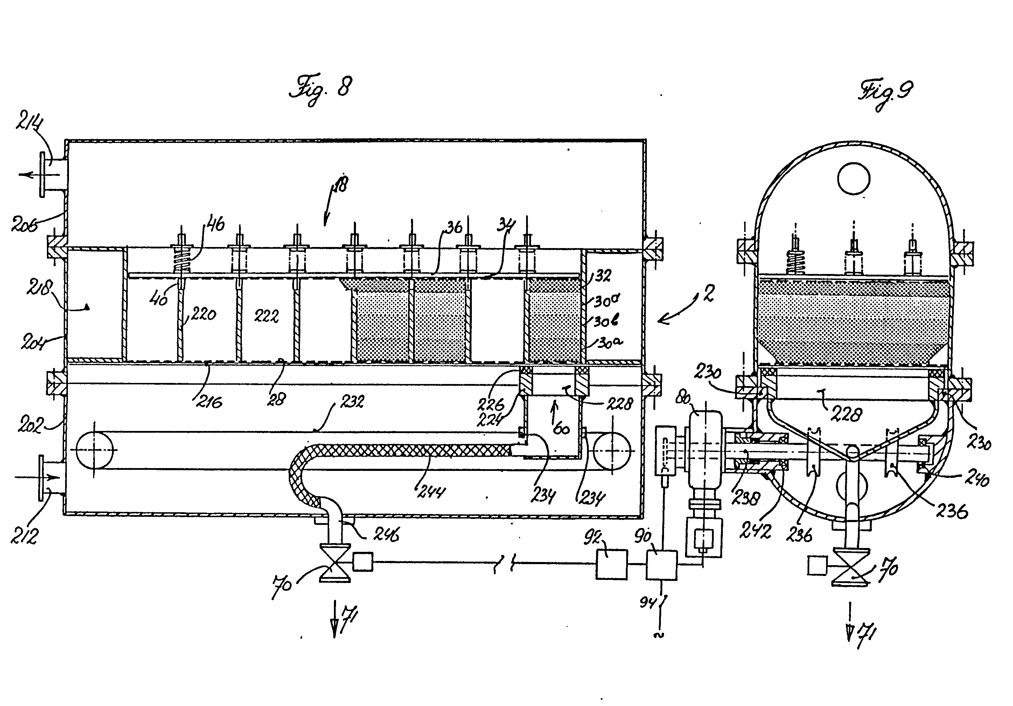

Bei der dritten Filtriervorrichtung gemäß den Fig. 8 und 9 ist das Gehäuse 2 im Gegensatz zu der ersten und zweiten Ausführungsform der vorhergehenden Figuren nicht im wesentlichen zylindrisch, sondern im wesentlichen rechteckig.

Ebenso wie bei den ersten und zweiten Filtriervorrichtungen das Gehäuse 2 auch mehr als zweiteilig ausgebildet sein kann, ist es hier bei der dritten Ausführungsform dreiteilig aus drei Gehäuseteilen 202, 204 und 206 ausgebildet, die sich vertikal übereinander erstrecken und jeweils über Befestigungsflansche direkt miteinander verbunden sind. Das untere Gehäuseteil 202 weist stirnseitig den Eintrittsstutzen 212 für zu filtrierendes Fluid und das obere Gehäuseteil 206 an derselben Stirnseite des Gehäuses 2 den Austrittsstutzen 214 für das Filtrat auf. Der mittlere Gehäuseteil 204 bildet hier zusammen mit dem in ihm integral ausgebildeten Trägerboden 216 die auswechselbare Einheit 18. Über dem Trägerboden 216 erstrecken sich längs der Höhe des mittleren Gehäuseteils 204 in Nachbarschaft von dessen Mantel je ein kastenförmiges Hohlprofil 218, welche den wirksamen Strömungsquerschnitt oberhalb des Trägerbodens 216 blendenartig verkleinern.

Zwischen den beiden Hohlprofilen 218 erheben sich vom Trägerboden 216 Zwischenwände 220, die sich parallel zu den beiden Hohlprofilen 218 erstrecken und zwischen diesen Hohlprofilen 218 gleichdimensionierte streifenförmige Durchlaßkanäle 222 für das zu filtrierende Fluid fluiddicht gegeneinander abteilen. Abgesehen davon, daß hier die Durchlaßkanäle 222 streifenförmig rechteckig und nicht wie bei der ersten und zweiten Filtriervorrichtung sektorförmig ausgebildet sind, ist sonst der Aufbau des Granulatbettes gleichartig wie bei der ersten und wie bei der zweiten Filtriervorrichtung. So ist die Trägerplatte 216 zwischen den Hohlprofilen 218 mit Öffnungen versehen. Darauf ist jeweils das nunmehr streifenförmig bemessene Siebnetz 28 aufgelegt. Darüber befindet sich in der früher beschriebenen dreistufigen Schichtung das Granulatbett 30 mit sich über den Zwischenwänden 220 durchgehend erstreckender, Abstand haltender, grobkörniger und fließfähiger Granulatschicht 32, einem sich darüber erstreckenden Siebnetz 34 und einem hier rechteckförmigen Deckel 36, der wie im Falle der früher beschriebenen Ausführungsformen durch Druckfedern 46 gegen das Granulatbett gepreßt ist. Die Druckfedern 46 sind auch hier auf Standbolzen 40 montiert, welche mit den Zwischenwänden 220 fest verbunden sind. Der Unterschied besteht lediglich darin, daß bei einer Standbolzen 40 tragenden Zwischenwand 220 mehrere Standbolzen nicht radial, sondern längs der Gehäusewand des mittleren Gehäuseteils 204 verteilt sind. Man kann dabei, wie dargestellt, jede Zwischenwand 220 mit Standbolzen versehen. Wenn jedoch mehr Durchlaßkanäle 222 vorgesehen sind, als dargestellt sind, kann man auch ebenso wie bei den früher beschriebenen Ausführungsformen nur jede zweite oder dritte Zwischenwand mit Standbolzen und Druckfedern versehen.

Anstelle des rotierbaren Rückspülarms 58 ist hier ein schlitzförmiger Saugkopf 224 vorgesehen, der eine Dichtplatte 226 trägt, welche nach Material und Funktion der Dichtplatte 50 der früher beschriebenen Ausführungsform entspricht. Durch nicht dargestellte Mittel ist der Saugkopf 224 ständig· elastisch gegen die Unterseite der Trägerplatte 216 vorgespannt. Die Schlitzweite der den Anschluß 60 für das Spülfluid bildenden Öffnung im Saugkopf 224 ist so bemessen, daß sie der Breite jedes Durchlaßkanales 222 entspricht. Die Dichtplatte 226 dient dazu, die als Anschluß 60 dienende Öffnung 228 im Saugkopf 224 ringsum gegen einen Leckstrom an der Unterseite des Trägerbodens 216 abzudichten.

Der Saugkopf 224 läuft auf beidseitigen Schienen 230 zwischen diesen quer zur Erstreckungsrichtung der Durchlaßkanäle 222, um so nacheinander mit jedem dieser Durchlaßkanäle kommunizieren zu können. Als Antriebsmittel für die Verschiebung längs der Schiene 230 dient beispielsweise die dargestellte umlaufende Antriebskette 232, welche mit dem Saugkopf 224 an zwei Anschlußstellen 234 fest verbunden ist. Die Antriebskette 232 ist als Kettenpaar ausgebildet, wobei die Trumms der Ketten parallel über zwei Antriebsrollen 236 laufen, welche auf einer Antriebswelle 238 sitzen, deren freies Ende in einem stirnseitigen Umfangslager 240 innerhalb des unteren Gehäuseteils 202 gelagert ist und deren anderer Endbereich durch die Seitenwand des unteren Gehäuseteils 202 innerhalb eines abgedichteten weiteren Lagers 242 durchgeführt ist. Das äußere Ende dieser Antriebswelle 238 ist analog wie bei den früheren Ausführungsformen mit dem Getriebekasten 80 eines äußeren Antriebs für die Bewegung des Anschlusses 60 für das Spülfluid verbunden.

Der Saugkopf 224 ist ferner über eine flexible Leitung 244, welche eine angepaßte Überlänge hat, durch eine dichte Durchführung 246 im unteren Gehäuseteil 202 mit dem Steuerventil 70 verbunden, welches wiederum zu einer Senke für 71 das Spülfluid führt.

Die Steuerung der Beaufschlagung des Granulatbettes mit Spülfluid jeweils nur in einem Durchlaßkanal 222 erfolgt analog wie im Falle der ersten und zweiten Ausführungsform. Eine Ausnahme besteht lediglich darin, daß zusätzlich eine Programmsteuerung vorgesehen ist, welche sicherstellt, daß die spezifische Spülzeit jedes Durchlaßkanals 222 gleich ist.

Bei allen drei beschriebenen Ausführungsformen dient als Spülfluid das bereits im Granulatbett gefilterte Filtrat, welches jeweils durch den Anschluß 60 für Spülfluid zum Reinigen des Granulatbettes zurückgesaugt wird und dabei abgeschiedene Schwebstoffe durch das Steuerventil 70 längs des jeweiligen Pfeils 71 abführt. Während bei üblichen Filtern mit Granulatbetten der für Rückspülung verbrauchte Anteil an Filtrat 2 bis 5 % ausmacht, werden bei Vorrichtungen nach der Erfindung nur ca. 0,3 bis 3 % benötigt.


**Patentansprüche**

1. Vorrichtung zum Abscheiden von Suspensa aus einem unter Druck stehenden Fluid, insbesondere einer Flüssigkeit, z.B. Abwasser, in einem Granulatbett (30), durch welches während eines Filtrierbetriebes das Fluid in einer Richtung führbar ist und aus welchem während eines Reinigungsbetriebes abgeschiedene Suspensa durch Führen von Spülfluid, insbesondere filtriertem Fluid, in der Gegenrichtung austragbar sind, wobei das Granulatbett während des Filtrierbetriebes und während des Reinigungsbetriebes so zusammengehalten ist, daß die relative Lage der Granulatteilchen zueinander im Granulatbett auch unter der Strömungseinwirkung während des Filtrierbetriebes und während des Reinigungsbetriebes im wesentlichen permanent gleich bleibt, dadurch gekennzeichnet, daß das Granulatbett (30) eine Matrix aus befestigten Granulatteilchen ist oder daß das Granulatbett (30) durch eine selbstnachstellende Kraftquelle (46) zusammengehalten wird, daß das Granulatbett (30) in mindestens zwei über den Durchströmungsquerschnitt verteilte, sich längs der Stromrichtung des Fluids erstreckende und voneinander getrennte Durchlaßkanäle (25;222) unterteilt ist, daß das zu filtrierende Fluid in einem kontinuierlichen Filtrierbetrieb durch wechselnde Durchlaßkanäle geführt ist, und daß die vom zu filtrierenden Fluid im Filtrierbetrieb jeweils nicht beaufschlagten wechselnden Durchlaßkanäle im Reinigungsbetrieb zur sequentiellen Beaufschlagung des ganzen Durchströmungsquerschnitts mit dem Spülfluid vorgesehen sind.

2. Vorrichtung nach Anspruch 1, dadurch gekennzeichnet, daß das Granulat mindestens zwei Korngrößen enthält, die in einem geschichteten Granulatbett (30a,b,c) in Stromrichtung des zu filtrierenden Fluids beim Filtrierbetrieb in ein- oder mehrfacher Folge abnehmen.

3. Vorrichtung nach Anspruch 1, dadurch gekennzeichnet, daß verschiedene Korngrößen des Granulats gleichmäßig im Granulatbett verteilt sind.

4. Vorrichtung nach einem der Ansprüche 1 bis 3, dadurch gekennzeichnet, daß die Kraft der Kraftquelle (46) längs des Fluidstromes angelegt ist.

5. Vorrichtung nach einem der Ansprüche 1 bis 4, dadurch gekennzeichnet, daß die Kraft der Kraftquelle (46) permanent am Granulatbett (30) angelegt ist.

6. Vorrichtung nach einem der Ansprüche 1 bis 4, dadurch gekennzeichnet, daß der Fluidstrom jeweils vertikal verläuft und die Kraft der Kraftquelle (46) an dem Granulatbett (30) nur bei Betrieb mit Stromrichtung von unten nach oben angelegt ist.

7. Vorrichtung nach einem der Ansprüche 1 bis 6, dadurch gekennzeichnet, daß die Kraft der Kraftquelle (46) einstellbar (48) ist.

8. Vorrichtung nach einem der Ansprüche 1 bis 7, dadurch gekennzeichnet, daß die Kraftquelle eine Hydraulikquelle mit Rücklaufsperre ist.

9. Vorrichtung nach einem der Ansprüche 1 bis 7, dadurch gekennzeichnet, daß die Kraftquelle eine federnde Einrichtung (46) ist.

10. Vorrichtung nach Anspruch 9, dadurch gekennzeichnet, daß die federnde Einrichtung eine mechanische Federeinrichtung (46) ist.

11. Vorrichtung nach einem der Ansprüche 2 bis 10, dadurch gekennzeichnet, daß das Granulat zwischen zwei längs des Fluidstroms aufeinanderfolgenden Abdeckungen (16, 28; 34, 36; 216, 28) gehalten ist, welche für die Fluide durchlässig, für das Granulat aber undurchlässig sind, und daß die Kraftquelle (46) den Abstand der Abdeckungen voneinander zu verkleinern sucht.

12. Vorrichtung nach Anspruch 11, dadurch gekennzeichnet, daß die eine Abdeckung (16, 28; 216, 28) stationär und die andere Abdeckung (34, 36) beweglich angeordnet sind.

13. Vorrichtung nach Anspruch 12, dadurch gekennzeichnet, daß die stationäre Abdeckung (16, 28) an einem Träger (16) für auswechselbare Granulatbetten (30) ausgebildet ist.

14. Vorrichtung nach Anspruch 10, dadurch gekennzeichnet, daß die federnde Einrichtung (46) an dem Träger (16) abgestützt ist.

15. Vorrichtung nach einem der Ansprüche 1 bis 14, dadurch gekennzeichnet, daß eine solche Anzahl von Durchlaßkanälen (25; 222) vorgesehen ist, daß im Filtrierbetrieb der überwiegende Anteil des Durchströmungsquerschnitts ständig für den Filtrierbetrieb zur Verfügung steht.

16. Vorrichtung nach Anspruch 15, dadurch gekennzeichnet, daß jeweils nur ein Durchlaßkanal (25; 222) im Reinigungsbetrieb vom Spülfluid beaufschlagbar ist.

17. Vorrichtung nach einem der Ansprüche 1 bis 16, dadurch gekennzeichnet, daß der Anschluß (60) für das Spülfluid schrittweise weiterschaltbar ist.

18. Vorrichtung nach einem der Ansprüche 1 bis 17, dadurch gekennzeichnet, daß der Anschluß (60) für das Spülfluid abgedichtet (62; 226) an die jeweils zugeordnete Mündung des Durchlaßkanals (25; 222) anschließbar ist.

19. Vorrichtung nach Anspruch 17 oder 18, dadurch gekennzeichnet, daß der Anschluß (60) für das Spülfluid an eine Senke (71) desselben nur angeschlossen ist, wenn der Anschluß mit der zugeordneten Mündung des im Reinigungsbetrieb jeweils zugeordneten Durchlaßkanals (25; 222), oder mehrerer derselben, kommuniziert.

20. Vorrichtung nach einem der Ansprüche 1 bis 19, dadurch gekennzeichnet, daß in den Durchlaßkanälen (25; 222) die Strömungsgeschwindigkeit des Spülfluids während des Reinigungsbetriebes jeweils größer als die Strömungsgeschwindigkeit des zu filtrierenden Fluids während des Filtrierbetriebes ist.

21. Vorrichtung nach Anspruch 20, dadurch gekennzeichnet, daß die Strömungsgeschwindigkeit beim Reinigungsbetrieb mindestens um etwa das 1,5-fache oder mehr größer als beim Filtrierbetrieb ist.

22. Vorrichtung nach einem der Ansprüche 1 bis 21, gekennzeichnet durch eine Einrichtung (92) zum impulsweisen Durchleiten des Spülfluids durch den jeweiligen Durchlaßkanal (25; 222) im Reinigungsbetrieb.

23. Vorrichtung nach Anspruch 22, dadurch gekennzeichnet, daß jeder Durchlaßkanal (25; 222) im Reinigungsbetrieb vor dem Weiterschalten zum jeweils nächsten Durchlaßkanal mit mehreren Impulsen ($t_4$ in Fig. 5) des Spülfluids beaufschlagbar ist.

24. Vorrichtung nach einem der Ansprüche 1 bis 23, dadurch gekennzeichnet, daß das Granulatbett (30) zylindrisch ausgebildet ist, daß die Durchlaßkanäle über den Umfang des Granulatbetts verteilte Sektoren (25) bilden und daß der Anschluß (60) für das Spülfluid um die Achse des Granulatbetts schwenkbar ist.

25. Vorrichtung nach Anspruch 24, dadurch gekennzeichnet, daß der Durchlaßquerschnitt des Anschlusses (60) zu dem sektorförmigen Querschnitt des jeweiligen Durchlaßkanals (25) komplementär ist.

26. Vorrichtung nach Anspruch 24 oder 25, dadurch gekennzeichnet, daß die Achse des Granulatbetts (30) vertikal gerichtet ist und das Granulatbett vertikal durchströmbar ist (Fig. 2).

27. Vorrichtung nach Anspruch 24 oder 25, dadurch gekennzeichnet, daß die Achse des Granulatbetts (30) horizontal gerichtet ist und das Granulatbett horizontal durchströmbar ist (Fig. 7).

28. Vorrichtung nach einem der Ansprüche 1 bis 23, dadurch gekennzeichnet, daß die Durchlaßkanäle (222) nebeneinander liegen und der Anschluß (60) des Spülfluids in Richtung der Streifenfolge hin und her bewegbar ist (Fig. 8,9).

29. Vorrichtung nach Anspruch 28, dadurch gekennzeichnet, daß die spezifische Spülzeit jedes streifenförmigen Durchlaßkanals (222) gleich gewählt ist.

30. Vorrichtung nach Anspruch 10, dadurch gekennzeichnet, daß die federnde Einrichtung (46) an mindestens einer Begrenzungswand (24; 220) zwischen benachbarten Durchlaßkanälen (25; 222) abgestützt ist.

31. Vorrichtung nach einem der Ansprüche 1 bis 30, dadurch gekennzeichnet, daß sich die Durchlaßkanäle (25; 222) nur über einen Teil der Durchströmungslänge des Granulatbettes (30) erstrecken und dabei der in Strömungsrichtung des zu filtrierenden Fluids folgende Bereich von grobkörnigem und fließfähigem Granulat (in Granulatschicht 32) angefüllt ist, das über den ganzen Strömungsquerschnitt verteilt Abstand zu den Zwischenwänden zwischen den Durchlaßkanälen hält und in das die Zwischenwände (24; 220) bei fortschreitender Kompression des Granulatbetts eindringen können.

## Claims

1. Apparatus for the separation of suspended particulate matter from a fluid under pressure, preferably by a liquid, e.g. an effluent, in a granulate bed (30) through which during a filtration process the fluid can flow in one direction and from which suspended particulate matter separated during a cleaning operation can be removed with the help of a flow of wash-fluid, preferably filtrated fluid, in the reversed direction, the granulate bed during the filtration process and during the cleaning operation being held together such that the relative position of the granules to one another in the granulate bed remains substantially permanently the same even under the influence of flow during the filtration operation and during the cleaning operation, characterized in that the granulate bed (30) is a matrix of fixed granulate particles or that the granulate bed (30) is held together through a self-adjusting power source (46), that the granulate bed (30) is divided into at least two passages (25; 222) distributed across the flow cross-section extending along the direction of flow of the fluid and separated from each other, and that the fluid to be filtrated flows through alternating passages in a continuous filtration process, and that the respective alternating passages not admitted each by the fluid to be filtrated in the filtration process during the cleaning operation are provided for admission of the wash fluid so that the whole flow cross-section is admitted sequentially.

2. Apparatus according to claim 1, characterized in that the granulate comprises at least two grain sizes, which in a laminated granulate bed (30a,b,c) are diminishing in size in one or more sequences in the direction of flow of the fluid to be filtrated during the filtration process.

3. Apparatus according to claim 1, characterized in that different grain sizes of the granulate are uniformly distributed in the granulate bed.

4. Apparatus according to any of the claims 1 to 3, characterized in that the power of the power source (46) is applied along the fluid flow.

5. Apparatus according to any of the claims 1 to 4, characterized in that the power of the power source (46) is permanently applied on the granulate bed (30).

6. Apparatus according to any of the claims 1 to 4, characterized in that the fluid flow passes vertically and the power of the power source (46) applies on the granulate bed (30) only when the fluid is flowing upwards.

7. Apparatus according to any of the claims 1 to 6, characterized in that the power of the power source (46) is adjustable (48).

8. Apparatus according to any of the claims 1 to 7, characterized in that the power source is a hydraulic source including a non-return means.

9. Apparatus according to any of the claims 1 to 7 characterized in that the power source is a springing means (46).

10. Apparatus according to claim 9, characterized in that the springing means is a mechanical springing device (46).

11. Apparatus according to any of the claims 2 to 10, characterized in that the granulate is kept between two covers (16, 28; 34, 36; 216, 28) being subsequent along the fluid flow, which are pervious to the fluids, however, impervious to the granulate, and that the power source (46) tends to shorten the distance between the covers.

12. Apparatus according to claim 11, characterized in that the one of the covers (16, 28; 216, 28) is stationary arranged and the other cover (34, 36) is movable arranged.

13. Apparatus according to claim 12, characterized in that the stationary cover (16, 28) is arranged at a support member (16) for exchangeable granulate beds (30).

14. Apparatus according to claim 10, characterized in that the springing means (46) is supported by a support member (16).

15. Apparatus according to any of the claims 1 to 14, characterized in that a sufficient number of passages (25; 222) is provided such that during filtration the major portion of the flow cross-section can be permanently utilized for the filtration operation.

16. Apparatus according to claim 15, characterized in that only one of the passages (25; 222) is admittable for the wash fluid in the cleaning operation.

17. Apparatus according to any of the claims 1 to 16, characterized in that the connection (60) for the wash fluid can be transferred step by step.

18. Apparatus according to any of the claims 1 to 17, characterized in that the connection (62; 226) for the wash fluid can be connected to the corresponding opening of the passage (25; 222) in a sealed manner.

19. Apparatus according to claim 17 or 18, characterized in that the connection (60) for the wash fluid is connected to a sink (71) thereof only, if the connection is in operative communication with the respective in the cleaning operation coordinated opening of the respective coordinated passage (25; 222) or several such passages.

20. Apparatus according to any of the claims 1 to 19, characterized in that in the passages (25; 222) the respective velocity of the fluid flow during the cleaning operation is higher than the velocity of the fluid flow of the fluid to be filtrated during the filtration process.

21. Apparatus according to claim 20, characterized in that the velocity of the fluid flow during the cleaning operation is at least about 1,5 times the velocity of the fluid flow during the filtration process.

22. Apparatus according to any of the claims 1 to 21, characterized by a device (92) effecting a pulslike flow of the wash fluid through the respective passage (25; 222) during the cleaning operation.

23. Apparatus according to claim 22, characterized in that each passage (25; 222) during the cleaning operation can be admitted by several pulses ($t_4$ in Fig. 5) of the wash fluid before the transfer to the respective following passage.

24. Apparatus according to any of the claims 1 to 23, characterized in that the granulate bed (30) is cylindrically shaped, that the passages are forming sectors (25) distributed over the circumference of the granulate bed and that the connection (60) for the wash fluid is turnable around the axis of the granulate bed.

25. Apparatus according to claim 24, characterized in that the passage cross-section of the connection (60) is complementary with the sectorshaped cross-section of the respective passage (25).

26. Apparatus according to claims 24 or 25, characterized in that the axis of the granulate bed (30) is directed vertically and the granulate bed can be flown through vertically (Fig. 2).

27. Apparatus according to claims 24 or 25, characterized in that the axis of the granulate bed (30) is directed horizontally and the granulate bed can be flown through horizontally (Fig. 7).

28. Apparatus according to any of the claims 1 to 23, characterized in that the passages (222) are positioned side by side and the connection (60) of the wash fluid can be moved back and forth in the direction of the stripe sequence (Figs. 8, 9).

29. Apparatus according to claim 28, characterized in that the specific washing times for each passage (222) having the form of a stripe are equal.

30. Apparatus according to claim 10, characterized in that the springing means (46) is supported by at least one separating wall (24; 220) between adjacent passages (25; 222).

31. Apparatus according to any of the claims 1 to 30, characterized in that the passages (25; 222) are extending over part of the flow length of the granulate bed (30) only, thereby the range following in the direction of flow of the fluid to be filtrated being filled with coarse and easy flowing granular medium (in the granulate layer 32), which, distributed over the whole flow cross-section, is at a distance from the separating walls between the passages and in which the separating walls (24; 220) may penetrate by further compression of the granulate bed.

**Revendications**

1. Dispositif pour extraire des matières en suspension hors d'un fluide sous pression, en particulier d'un liquide, par exemple des eaux résiduaires, et les déposer, dans un lit de granulats (30), à travers lequel, pendant une exploitation en mode filtration, le fluide peut passer dans une direction et duquel, pendant une exploitation en mode nettoyage, on peut enlever les matières en supension, déposées, en faisant passer le fluide de rinçage, en particulier le fluide filtré, dans la direction opposée, étant précisé que pendant l'exploitation en mode filtration et pendant l'exploitation en mode nettoyage, la cohésion du lit de granulats est assurée de façon telle que, même sous l'action du courant pendant l'exploitation en mode filtration et pendant l'exploitation en mode nettoyage, la position relative des particules du granulat reste en permanence essentiellement identique, caractérisé en ce que le lit de granulats (30) est une matrice de particules de granulats fixées; ou bien que la cohésion du lit de granulats (30) est assurée par une source d'énergie autorégulatrice (46); en ce que le lit de granulats (30) est divisé en au moins deux canaux de passage (25; 222) répartis sur la section de l'écoulement, s'étendant longitudinalement dans la direction de l'écoulement du fluide et séparés l'un de l'autre; en ce que l'on fait passer le fluide à filtrer, en mode continu d'exploitation et de filtration, à travers des canaux de passage alternativement différents; et en ce qu'il est prévu que les canaux de passage à travers lesquels, alternativement, en exploitation et en mode filtration, le fluide à filtrer ne passe pas, sont exploités en mode nettoyage de façon que la totalité de la section d'écoulement reçoive successivement le fluide de rinçage.

2. Dispositif selon la revendication 1, caractérisé en ce que le granulat contient au moins deux dimensions de granulométrie qui, dans un lit de granulats constitué de plusieurs couches (30a,b,c), vont en décroissant, selon une succession unique ou une succession multiple, dans le sens du courant du fluide à filtrer, en exploitation en mode filtration.

3. Dispositif selon la revendication 1, caractérisé en ce que les différentes dimensions de granulométrie du granulat sont régulièrement réparties dans le lit de granulat.

4. Dispositif selon l'une des revendications 1 à 3, caractérisé en ce que l'effort de la source d'énergie (46) s'applique selon la direction longitudinale du courant de fluide.

5. Dispositif selon l'une des revendications 1 à 4, caractérisé en ce que l'effort de la source d'énergie (46) s'applique en permanence sur le lit de granulats (30).

6. Dispositif selon l'une des revendications 1 à 4, caractérisé en ce que le courant de fluide s'écoule respectivement verticalement; et en ce que l'effort de la source d'énergie (46) ne s'applique sur le lit de granulats (30) qu'en exploitation avec la direction du courant dirigée de bas en haut.

7. Dispositif selon l'une des revendications 1 à 6, caractérisé en ce que l'on peut régler (48) l'effort de la source d'énergie (46).

8. Dispositif selon l'une des revendications 1 à 7, caractérisé en ce que la source d'énergie est une source hydraulique avec verrouillage antiretour.

9. Dispositif selon l'une des revendications 1 à 7, caractérisé en ce que la source d'énergie est un dispositif à ressort (46).

10. Dispositif selon la revendication 9, caractérisé en ce que le dispositif à ressort est un dispositif à ressort mécanique (46).

11. Dispositif selon l'une des revendications 2 à 10, caractérisé en ce que le granulat est maintenu entre deux couvercles (16, 28; 34, 35; 216, 28) qui se succèdent dans la direction longitudinale du courant du fluide et qui sont perméables au fluide mais imperméables au granulat; et en ce que la source d'énergie (46) tend à diminuer la distance à laquelle les couvercles sont l'un de l'autre.

12. Dispositif selon la revendication 11, caractérisé en ce que l'un des couvercles (16, 28; 216, 28) est disposé fixe et l'autre couvercle (34, 36), disposé mobile.

13. Dispositif selon la revendication 12, caractérisé en ce que le couvercle fixe (16, 28) est conçu sous forme de support (16) pour des lits de granulat (30) que l'on peut échanger.

14. Dispositif selon la revendication 10, caractérisé en ce que le dispositif à ressort (46) s'appuie sur le support (16).

15. Dispositif selon l'une des revendications 1 à 14, caractérisé en ce qu'il est prévu un nombre de canaux de passage (25; 222) tel qu'en exploitation en mode filtration on dispose en permanence, pour l'exploitation en mode filtration, de la proportion prépondérante de la section d'écoulement.

16. Dispositif selon la revendication 15, caractérisé en ce que chaque fois un seul canal de passage (25; 222) peut être traversé par le fluide de rinçage en mode nettoyage.

17. Dispositif selon l'une des revendications 1 à 16, caractérisé en ce que le raccord (30) pour le fluide de rinçage peut progresser pas à pas.

18. Dispositif selon l'une des revendications 1 à 17, caractérisé en ce que le raccord (60) pour le fluide de rinçage peut se raccorder de façon étanche (62; 226) à l'embouchure respectivement correspondante du canal de passage (25; 222).

19. Dispositif selon la revendication 17 ou 18, caractérisé en ce que le raccord (60) pour le fluide de rinçage n'est raccordé à un point d'évacuation (71) de ce fluide de rinçage que lorsque le raccord communique avec l'embouchure correspondante du canal de passage qui correspond respectivement en mode nettoyage (25; 222) ou avec plusieurs de ces embouchures.

20. Dispositif selon l'une des revendications 1 à 19, caractérisé en ce que la vitesse d'écoulement du fluide de rinçage dans les canaux de passage (25; 222) pendant le mode nettoyage est respectivement supérieure à la vitesse d'écoulement du fluide à filtrer pendant le mode filtration.

21. Dispositif selon la revendication 22, caractérisé en ce que la vitesse d'écoulement en mode nettoyage est d'au moins environ 1,5 fois ou plus, supérieure à ce qu'elle est en mode filtration.

22. Dispositif selon l'une des revendications 1 à 21, caractérisé par un mécanisme (92) pour envoyer, par impulsions, le fluide de rinçage à travers le canal de passage correspondant (25; 222) en mode nettoyage.

23. Dispositif selon la revendication 22, caractérisé en ce qu'en mode nettoyage, chaque canal de passage (25; 222), avant la progression pour venir au canal de passage respectivement suivant, peut recevoir plusieurs impulsions ($t_4$ sur la figure 5) d'intervention du fluide de rinçage.

24. Dispositif selon l'une des revendications 1 à 23, caractérisé en ce que le lit de granulats (30) a une forme cylindrique; en ce que les canaux de passage forment des secteurs (25) répartis sur la périphérie du lit de granulats; et en ce que le raccord (30) pour le fluide de rinçage peut pivoter autour de l'axe du lit de granulats.

25. Dispositif selon la revendication 24, caractérisé en ce que la section de passage du raccord (60) est complémentaire de la section, en forme de secteur, du canal de passage respectif (25).

26. Dispositif selon la revendication 24 ou 25, caractérisé en ce que l'axe du lit de granulats (30) est dirigé verticalement; et en ce que le lit de granulats peut être traversé verticalement par le courant de fluide (figure 2).

27. Dispositif selon la revendication 24 ou 25, caractérisé en ce que l'axe du lit de granulats (30) est dirigé horizontalement; et en ce que le lit de granulats peut être traversé horizontalement par le courant de fluide (figure 7).

28. Dispositif selon l'une des revendications 1 à 3, caractérisé en ce que les canaux de passage (122) sont situés les uns à côté des autres; et en ce que le raccord (60) du fluide de rinçage peut prendre un mouvement de va et vient selon la direction de la sucession des bandes (figure 8, 9).

29. Dispositif selon la revendication 28, caractérisé en ce que l'on choisit identique la durée spécifique de rinçage de chaque canal de passage en forme de bande (222).

30. Dispositif selon la revendication 10, caractérisé en ce que le dispositif à ressort (46) s'appuie au moins sur une paroi de séparation (24; 220) entre des canaux de passage voisins (25; 222).

31. Dispositif selon l'une des revendications 1 à 30, caractérisé en ce que les canaux de passage (25; 222) ne s'étendent que sur une partie de la longueur du lit de granulat (30) dans le sens de l'écoulement; et en ce que la zone qui suit, dans la direction de l'écoulement du fluide à filtrer, est remplie de granulat de granulométrie grossière et capable de couler (dans la couche de granulat 32), qui, sur toute la section d'écoulement, maintient la distance aux parois intermédiaires situées entre les canaux de passage et dans lequel les parois intermédiaires (24; 220) peuvent pénétrer au fur et à mesure de la compression du lit de granulat.

Fig.1

Fig.2

Fig.3

Fig. 4.

84
86
88
56

$t_1$  $t_2$  $t_1$

A

$t_3$  $t_3$  $t_3$

B

Fig. 5.

$t_4$  $t_4$  $t_4$

$t_1$  $t_2$  $t_1$

A

$t_3$

Fig. 6.

B

$t_4$

Fig. 7.

0 082 520

Fig. 8

Fig. 9

0 082 520